Europäisches Patentamt

European Patent Office

Office européen des brevets

(19)

(11) Veröffentlichungsnummer : **0 042 833**
**B1**

(12) **EUROPÄISCHE PATENTSCHRIFT**

(45) Veröffentlichungstag der Patentschrift :
18.09.85

(21) Anmeldenummer : 81890100.1

(22) Anmeldetag : 15.06.81

(51) Int. Cl.⁴ : **B 65 G 57/06**

(54) Stapelvorrichtung für Gittermatten.

(30) Priorität : **16.06.80 AT 3164/80**

(43) Veröffentlichungstag der Anmeldung :
30.12.81 Patentblatt 81/52

(45) Bekanntmachung des Hinweises auf die Patenterteilung : 18.09.85 Patentblatt 85/38

(84) Benannte Vertragsstaaten :
CH DE FR GB IT LI

(56) Entgegenhaltungen :
AT-A-  321 075
DE-A- 2 014 707
FR-A- 1 589 713
US-A- 3 109 543

(73) Patentinhaber : *EVG Entwicklungs- u. Verwertungs-*
*Gesellschaft m.b.H.*
**Vinzenz-Muchitsch-Strasse 36**
**A-8011 Graz (AT)**

(72) Erfinder : **Schmidt, Gerhard, Dipl.-Ing.**
**Rosengasse 7**
**A-8042 Graz (AT)**
Erfinder : **Ritter, Klaus, Dipl.-Ing.**
**Peterstalstrasse 157**
**A-8042 Graz (AT)**
Erfinder : **Ritter, Gerhard, Dipl.-Ing. Dr.**
**Unterer Plattenweg 47**
**A-8043 Graz (AT)**

(74) Vertreter : Holzer, Walter, Dipl.-Ing. et al
Patentanwälte Dipl.-Ing. Dr.techn. Schütz Alfred
Dipl.-Ing. Dr.techn. Pfeifer Rudolf Dr.phil. Mrazek
Engelbert Dipl.-Ing. Holzer Walter Dipl.-Ing. Pfeifer
Otto
Fleischmanngasse 9 A-1040 Wien (AT)

**Beschreibung**

Die Erfindung betrifft eine Stapelvorrichtung für Gittermatten, insbesondere für geschweißte Bewehrungsmatten, mit Einrichtungen zum geradlinigen Führen der aus einer Fertigungsmaschine austretenden Gittermatten in deren Vorschubrichtung bis über den Ablagebereich der Stapelvorrichtung und zur Freigabe der Gittermatten über diesem Aglagebereich, sowie vorzugsweise mit einem im Ablagebereich der Stapelvorrichtung angeordneten Rollengang zur Aufnahme der gestapelten Matten.

Vorrichtungen dieser Gattung sind verschiedentlich bekannt und weisen, wenn die aus der Fertigungsmaschine austretenden Gittermatten lediglich gestapelt werden sollen, eine auf- und abbewegbare, vorzugsweise, mit mindestens einem Rollengang ausgerüstete Bühne auf, die im Rhythmus des Auslaufens der Bewehrungsmatten aus der Fertigungsmaschine schrittweise bis zur tiefsten Endlage absenkbar ist (DE-A-2 014 707).

Wenn mit Hilfe derartiger Vorrichtungen hohe Mattenstapel hergestellt werden sollen, so muß die Hebebühne bis unter den Boden der Werkshalle absenkbar sein. Um die schweren Mattenstapel dann von der Hebebühne wieder entfernen zu können, muß diese, mitsamt den auf ihr gestapelten Matten, wieder auf das Niveau des Werkhallenbodens angehoben werden.

Das schrittweise Absenken und das anschließende Wiederanheben des schweren Mattenstapels verursacht einen nutzlosen Energieverbrauch und erfordert entsprechend leistungsfähige Antriebseinrichtungen. Dazu kommt als weiteres Erschwernis die Notwendigkeit, einen Schacht zum Absenken der Hebebühne im Boden der Werkshalle vorsehen zu müssen.

Eine weitere bekannte Vorrichtung zum Stapeln von Gittermatten innerhalb eines in deren Vorschubrichtung angeordneten Ablagebereiches, mit deren Hilfe die Matten vor ihrem Ablegen auf dem Mattenstapel auch alternierend gewendet werden können, um die Stapelhöhe zu verringern, verfügt über in vertikalen Ebenen verfahrbare Arme mit Halterungen zum Führen und zum temporären Festhalten jeder Gittermatte bis zum Stapeln (AT-A-321 075).

Bei dieser Vorrichtung, bei welcher der verfahrbare Arm jede Matte bis knapp über das Niveau der Oberfläche der bereits einen Stapel bildenden Matten heranführt und die jeweils an dem Arm festgehaltene Matte dann auf den Stapel ablegt, werden nur einzelne Matten, nicht jedoch der ganze Stapel bewegt. Die Anforderungen an die Leistungsfähigkeit der Antriebseinrichtungen sind somit erheblich geringer als bei der erstgenannten Vorrichtung, dafür bedarf es verhältnismäßig komplizierter Mechanismen und Steuereinrichtungen, um jede Matte in die richtige Lage bezüglich der Oberflächen der bereits gestapelten Matten zu führen.

Es sei schließlich noch erwähnt, daß eine kombinierte Wende- und Stapelvorrichtung bekannt ist, bei welcher die aus einer Fertigungsmaschine austretenden Gittermatten zunächst durch einen Förderer in Mattenaustrittsrichtung weiterbewegt und sodann durch mit einem Mattenwender zusammenwirkende Schubbalken in seitlicher Richtung über einen seitlichen Ablagebereich geschoben werden, um dort abwechselnd gewendet und ungewendet gestapelt zu werden (FR-A-1 589 713). Bei dieser bekannten Vorrichtung sind für von den Mattenenden entfernte Bereiche des bei der letzten Verscheibungsbewegung vordersten Randdrahtes der jeweils auf den Stapel abzulegenden Matte oben offene vertikale Führungen vorgesehen, von denen jeweils ein Teil außerhalb der Matte liegt und der andere in eine Gittermasche eingreift, um die am Randdraht erfaßte Matte bei der Rücklaufbewegung der Schubbalken festzuhalten. Abgesehen davon, daß ein zusätzlichen Platz erfordernder seitlicher Ablagebereich für die Matten in den meisten Fällen unerwünscht ist, hat diese bekannte Stapelvorrichtung weitere Mängel, wie insbesondere den, daß die Abstützung der Matten in relativ großen Abständen an den Schubbalken zumindest bei größeren Mattenformaten ein Durchbiegen der Matten beim Vorschieben derselben über den Ablagebereich und daraus resultierende Betriebsstörungen zur Folge haben kann, daß ferner lediglich einen einzigen Randdraht der Matte umgreifende Führungen die für einen einwandfreien Stapel erforderliche genaue Ausrichtung der Matten nicht sichern können und daß schließlich komplizierte Einrichtungen oder Manipulationen erforderlich sind, um die in Gittermaschen eingreifenden Teile der vertikalen Führungen zur Freigabe des fertigen Mattenstapels zu entfernen.

Die Erfindung soll nun die Aufgabe lösen, eine Stapelvorrichtung der einleitend angegebenen Gattung, bei welcher also die aus der Fertigungsmaschine austretenden Gittermatten in ihrer Vorschubrichtung geradlinig bis über den Ablagebereich geführt werden, so auszubilden, daß sie mit minimalem Energieaufwand, also mit möglichst kleinen zusätzlich bewegten Massen, und unter Verwendung einfacher technischer Mittel, die aber dennoch ein störendes Durchbiegen der Gittermatten bei ihrer Bewegung zum Ablagebereich verhindern, Gittermatten genau übereinander stapeln kann und der fertige Mattenstapel auf einfache Weise für den Abtransport zugänglich gemacht werden kann.

Diese Aufgabe wird erfindungsgemäß dadurch gelöst, daß an beiden Seiten des Gerüstes der Stapelvorrichtung in Mattenvorschubrichtung verlaufende Tragbalken mit Hilfe von Schwenkhebeln von unten her mit Abstand von den Mattenlängsrändern an die Mattenvorschubebene heranschwenkbar gelagert sind, daß am Gerüst die beiden Mattenlängsränder von oben her abstützende und von der Seite her führende Begrenzungsbleche angebracht sind und daß nahe dem vorderen bzw. hinteren Ende des Ablagebereiches in einem gegenseitigen Abstand, welcher im wesentlichen der zwischen den beiden äußersten Querdrähten gemessenen Mattenlänge entspricht, nach oben offene vertikale Führungen für die überstehenden Endteile eines vorbestimmten Längsdrahtes der zu stapelnden Gittermatten vorgesehen sind, wobei zur Freigabe der jeweils in der Mattenvorschubebene befindlichen Matte die Tragbalken auseinanderschwenkbar sind und zur Freigabe des fertigen Mattenstapels die Führung für die vorderen Mattenenden aus ihrer vertikalen Arbeitsstellung entfernbar ist.

Mit dieser Bauweise der Stapelvorrichtung wird erreicht, daß jede auf die Tragbalken aufgeschobene Gittermatte randseitig mittels der Begrenzungsbleche geführt und so eingespannt gehalten wird, daß sie selbst bei relativ großer Breite ohne das Erfordernis einer schwierig entfernbaren Abstützung im mittleren Bereich nahezu ebenflächig gehalten wird, bis die überstehenden Endteile des vorbestimmten Längsdrahtes der Matte über den vorzugsweise nach oben trichterartig erweiterten vertikalen Führungen zu liegen kommen. In dieser Lage wird die Matte durch Auseinanderschwenken der Tragbalken über dem Ablagebereich freigegeben, so daß infolge der vertikalen Führung von Drahtüberständen an beiden Mattenenden beim Herabfallen der Matten auch lange Matten mit genau aufeinander ausgerichteten Längs- und Querdrähten gestapelt werden, ohne daß es dazu beweglicher und mechanisch angetriebener Konstruktionsteile bedarf. Nach Entfernen, z. B. automatischem Wegschwenken, der vertikalen Führung am vorderen Ende des Ablagebereiches kann der fertige Mattenstapel ohne jegliche Behinderung durch die nur einen Drahtüberstand erfassende vertikale Führung am hinteren Ende des Ablagebereiches in Mattenvorschubrichtung aus dem Ablagebereich entfernt werden, so daß unmittelbar danach mit einem neuen Stapelvorgang begonnen werden kann.

Bei einer bevorzugten Ausführungsform der Erfindung sind die Schwenkhebel für die Tragbalken samt ihren vorzugsweise durch hydraulische Arbeitszylinder gebildeten Betätigungsvorrichtung sowie die Begrenzungsbleche mittels Halterungen an Querholmen des Gerüstes der Stapelvorrichtung verstellbar und feststellbar, so daß die Stapelvorrichtung verschiedenen Breiten der Gittermatten angepaßt werden kann.

Wenn nach einem weiteren Erfindungsmerkmal die vertikale Führung für die vorderen Mattenenden längs einer Tragschiene in Vorschubrichtung der Matten verstellbar und feststellbar angeordnet ist, kann die Stapelvorrichtung in weiten Grenzen auch unterschiedlichen Mattenlägen angepaßt werden.

Bei einer bevorzugten Ausführungsform ist ferner die vertikale Führung für die vorderen Mattenenden von dem einen Arm eines zweiarmigen Hebels gebildet, an dessen anderem Arm die Kolbenstange eines Arbeitszylinders angreift, mit dem die Führung aus ihrer vertikalen Arbeitsstellung in eine annähernd horizontale Stellung verschwenkbar ist. Dadurch wird es möglich, die gestapelten Matten rasch unter der weggeschwenkten vertikalen Führung hindurch aus dem Ablagebereich fortzuschieben und die Vorrichtung wieder zur Aufnahme neuer Matten bereit zu stellen.

Anhand eines bevorzugten Ausführungsbeispiels wird die Erfindung nun unter Bezugnahme auf die Zeichnung näher erläutert werden. Es zeigt

Figur 1 eine Seitenansicht einer Stapelvorrichtung nach der Erfindung ;

Figur 2 eine zugehörige Stirnansicht und

Figur 3 eine Draufsicht auf das gestapelte Gitter, wobei die vertikalen Führungen für die vorstehenden Endteile des Mittelängsdrahtes erkennbar sind.

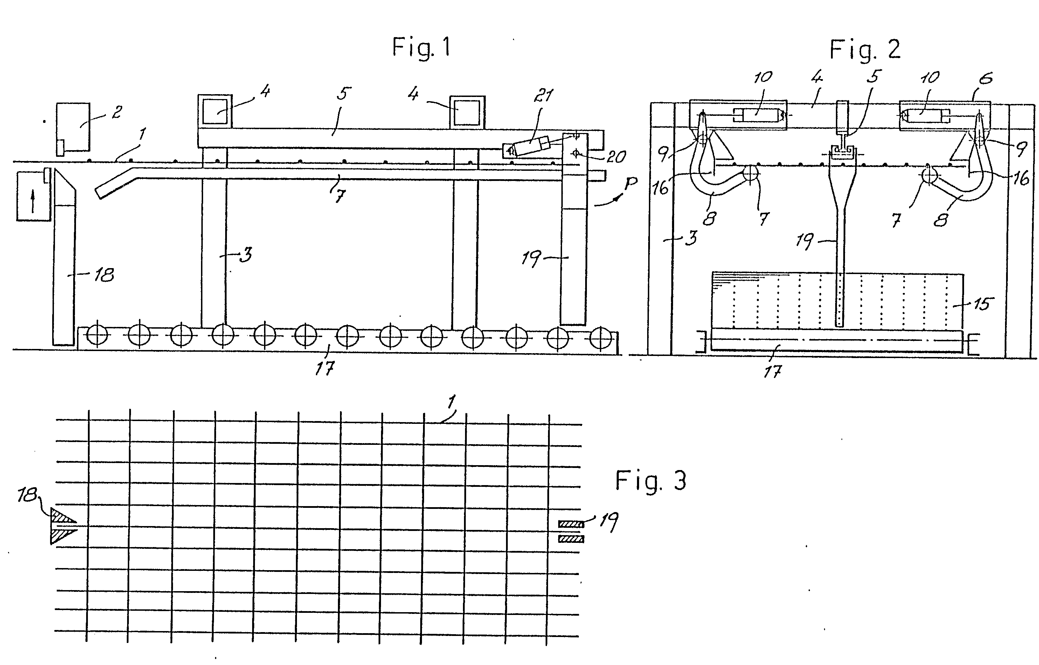

In Figur 1 ist angenommen, daß die aus einer Fertigungsmaschine austretende kontinuierliche Gitterbahn zuerst eine Schere 2 passiert und in Matten gewünschter Länge unterteilt wird.

In einem Gerüst 3 sind Querholme 4 und eine Tragschiene 5 angeordnet. An den Querholmen 4 sind verstell- und feststellbare Halterungen 6 für Tragbalken 7 montiert. Die Tragbalken 7 sind an den einen Armen zweiarmiger Hebel 8 angeordnet, welche an Gelenken 9 schwenkbar gelagert sind. Arbeitszylinder 10, die mit ihren Kolbenstangen an den anderen Armen der zweiarmigen Hebel 8 angelenkt sind, können diese um die Gelenke 9 aus der in den Figuren 1 und 2 gezeigten Arbeitsstellung herausschwenken, so daß die Tragbalken 7 die vorher auf sie aufgeschobenen Matten 1 freigeben, worauf diese auf den Mattenstapel 15 fallen. An den Halterungen 6 für die zweiarmigen Hebel 8 sind noch Begrenzungsbleche 16 für die Gittermatten 1 vorgesehen. Diese Begrenzungsbleche führen die Gittermatten seitlich und halten überdies die Mattenenden nieder, wobei auf die Mattenenden von horizontal vorstehenden Teilen der Begrenzungsbleche 16 und von den Tragbalken 7 ein Einspannmoment ausgeübt wird, durch welches ein zu starkes Durchbiegen der Matten, das zu einem vorzeitigen Abgleiten derselben von den Tragbalken 7 führen könnte, verhindert wird. Wie aus den Figuren 1 und 2 zu ersehen ist, ruht der Mattenstapel 15 auf einem Rollengang 17.

An den beiden stirnseitigen Enden der Stapelvorrichtung sind vertikale, aus zwei parallelen Schienen gebildete Führungen 18, 19 vorgesehen, wobei zumindest eine dieser Führungen, nämlich die für das äußere Mattenende vorgesehene Führung 19, längs der Tragschiene 5 verstell- und feststellbar ausgebildet ist. Im gezeigten Ausführungs beispiel ist die Führung 19 überdies als der eine Arm eines in einem Gelenk 20 schwenkbar gelagerten zweiarmigen Hebels ausgebildet, an dessen anderem Arm die Kolbenstange eines Arbeitszylinders 21 angelenkt ist. Die Führung 19 kann daher mittels des Arbeitszylinders 21 in Richtung des Pfeiles P in Figur 1 aus der Arbeitsstellung herausgeschwenkt werden, um den Mattenstapel zum Abtransport freizugeben.

Wie aus Figur 2 erkennbar ist, ist jede Führung an ihrem oberen Ende trichterartig erweitert, so daß auch bei nicht ganz exakter Führung einer auf die Tragbalken 7 vorgeschobenen Gittermatte 1 ein ausgewählter Längsdraht dieser Matte, vorzugsweise deren mittler Längsdraht, mit seinen überstehenden Endteilen in die vertikalen Führungen eintreten kann. Sobald die Tragbalken 7 mittels der Arbeitszylinder 10 zur Seite geschwenkt werden, kann die mittels der Schere 2 von der auslaufenden Gitterbahn abgetrennte, auf den Tragbalken 7 ruhende Matte frei herunterfallen. Dabei gelangen die Endteile des ausgewählten Längsdrahtes in den engen Bereich der Führungen 18, 19 und führen die Matten in exakter gewünschter Lage auf den Mattenstapel.

## Patentansprüche

1. Stapelvorrichtung für Gittermatten, insbesondere für geschweißte Bewehrungsmatten, mit Einrichtungen (7, 16) zum geradlinigen Führen der aus einer Fertigungsmaschine austretenden Gittermatten (1) in deren Vorschubrichtung bis über den Ablagebereich (17) der Stapelvorrichtung und zur Freigabe der Gittermatten über diesem Ablagebereich, sowie vorzugsweise mit einem im Ablagebereich der Stapelvorrichtung angeordneten Rollengang zur Aufnahme der gestapelten Matten, dadurch gekennzeichnet, daß an beiden Seiten des Gerüstes (3) der Stapelvorrichtung in Mattenvorschubrichtung verlaufende Tragbalken (7) mit Hilfe von Schwenkhebeln (8) von unten her mit Abstand von den Mattenlängsrändern an die Mattenvorschubebene heranschwenkbar gelagert sind, daß am Gerüst (3) die beiden Mattenlängsränder von oben her abstützende und von der Seite her führende Begrenzugsbleche (16) angebracht sind und daß nahe dem vorderen bzw. hinteren Ende des Ablagebereiches in einem gegenseitigen Abstand, welcher im wesentlichen der zwischen den beiden äußersten Querdrähten gemessenen Mattenlänge entspricht, nach oben offene vertikale Führungen (18, 19) für die überstehenden Endteile eines vorbestimmten Längsdrahtes der zu stapelnden Gittermatten vorgesehen sind, wobei zur Freigabe der jeweils in der Mattenvorschubebene befindlichen Matte die Tragbalken (7) auseinanderschwenkbar sind und zur Freigabe des fertigen Mattenstapels die Führung (19) für die vorderen Mattenenden aus ihrer vertikalen Arbeitsstellung entfernbar ist.

2. Stapelvorrichtung nach Anspruch 1, dadurch gekennzeichnet, daß die Schwenkhebel (8) für den Tragbalken (7) samt ihren vorzugsweise durch hydraulische Arbeitszylinder gebildeten Betätigungsvorrichtungen (10) sowie die Begrenzungsbleche (16) mittels Halterungen (6) an Querholmen (4) des Gerüstes (3) der Stapelvorrichtung verstellbar und feststellbar sind.

3. Stapelvorrichtung nach Anspruch 1, dadurch gekennzeichnet, daß die vertikalen Führungen (18, 19) nach oben trichterartig erweitert sind.

4. Stapelvorrichtung nach einem der Ansprüche 1 bis 3, dadurch gekennzeichnet, daß die vertikale Führung (19) für die vorderen Mattenenden in Vorschubrichtung der Matten längs einer Tragschiene (5) verstell- und feststellbar angeordnet ist.

5. Stapelvorrichtung nach einem der Ansprüche 1 bis 4, dadurch gekennzeichnet, daß die vertikale Führung (19) für die vorderen Mattenenden von dem einen Arm eines zweiarmigen Hebels gebildet ist, an dessen anderem Arm die Kolbenstange eines Arbeitszylinders (21) angreift, mit dem die Führung (19) aus ihrer vertikalen Arbeitsstellung in eine annähernd horizontale Stellung verschwenkbar ist.

## Claims

1. A Stacking apparatus for mesh mats, in particular welded reinforcement mats, comprising means (7, 16) for rectilinearly guiding the mesh mats (1) emerging from a manufacturing machine in the direction of their advance up to a location above the deposition area (17) of the stacking apparatus and for releasing the mesh mats above this deposition area, as well as preferably a roller path located in the deposition area of the stacking apparatus for receiving the stacked mats, characterized in that at both sides of the frame (3) of the stacking apparatus support bars (7) extending in the direction of advance of the mats are pivotable by means of pivot levers (8) from below towards the plane of advance of the mats at a distance from the longitudinal edges of the mats, in that boundary sheets (16) are attached to the frame (3) which support the two longitudinal edges of the mats from above and guide these edges laterally, and in that near the front and rear end, respectively, of the deposition area upwards open vertical guides (18, 19) for the protruding end portions of a predetermined longitudinal wire of the mats to be stacked are provided at a distance which substantially corresponds to the length of a mat as measured between its two outermost transverse wires, whereby the support bars (7) can be pivoted apart to release each mat positioned in the plane of advance of the mats nad the guide (19) for the front mat end is removeable from its vertical operating position to release the finished mat stack.

2. Stacking apparatus according to claim 1, characterized in that the pivot levers (8) for the support bars (7) as well as their actuating means (10), preferably hydraulic cylinders, and the boundary sheets (16) are adjustable and fixable to transverse bars (4) of the frame (3) of the stacking apparatus by means of holders (6).

3. Stacking apparatus according to claim 1, characterized in that the vertical guides (18, 19) are enlarged upwards in a funnel-like manner.

4. Stacking apparatus according to one of the claims 1 to 3, characterized in that the vertical guide (19) for the front end of the mats is adjustable in the direction of advance of the mats along a support bar (5) and fixable thereon.

5. Stacking apparatus according to one of the claims 1 to 4, characterized in that the vertical guide (19) for the front end of the mats is formed by one arm of a two-armed lever, while the piston rod of a working cylinder (21) engages the other arm of said lever, whereby the guide (19) is pivotable from its vertical operating position to an approximately horizontal position.

## Revendications

1. Installation d'empilage de treillis, en particulier de treillis d'armature soudés, comprenant des dispositifs (7, 16) destinés au guidage en ligne droite des treillis (1) sortant de la machine de fabrication et dans le sens dans lequel ils sont poussés jusqu'au-dessus de la région de dépôt (17) de l'installation d'empilage et en vue de la libération des treillis sur cette région de dépôt, ainsi que de préférence une piste à rouleaux prévue dans la région du dépôt de l'installation d'empilage et destinée à la réception des treillis empilés, caractérisée en ce que des barres de support (7) disposées des deux côtés du bâti (3) de l'installation d'empilage et dans le sens de l'avance des treillis sont montées à l'aide de leviers pivotants (8) de manière à pouvoir pivoter à partir du bas et à une certaine distance des bords longitudinaux des treillis jusque dans le plan de l'avance des treillis, en ce que sur le bâti (3) les deux bords longitudinaux des treillis sont déposés en s'appuyant sur et en étant guidés par les côtés par des tôles de limitation (16), et en ce qu'à proximité de l'extrémité avant ou arrière de la région de dépôt et à une distance mutuelle correspondant sensiblement à la longueur des treillis mesurée entre les deux fils transversaux les plus à l'extérieur sont prévus des guides verticaux (18, 19) ouverts vers le haut et destinés aux parties d'extrémité en saillie d'un fil longitudinal prédéterminé des treillis à empiler, les barres de support (7) pouvant être pivotées en direction opposée l'une et l'autre pour libérer le treillis se trouvant dans le plan de l'avance et le guide (19) destiné à l'extrémité avant des treillis pouvant être éloigné de sa position de travail verticale pour libérer l'empilement de treillis terminé.

2. Installation d'empilage selon la revendication 1, caractérisée en ce que les leviers pivotants (8) destinés aux barres de support (7) et leurs dispositifs de manœuvre (10) constitués de préférence sous forme de vérins hydrauliques, ainsi que les tôles de limitation (16), peuvent être réglés et fixés au moyen de fixations (6) sur les longerons transversaux (4) du bâti (3) de l'installation d'empilage.

3. Installation d'empilage selon la revendication 1, caractérisée en ce que les guides verticaux (18, 19) sont élargis vers le haut en forme d'entonnoirs.

4. Installation d'empilage selon des revendications 1 à 3, caractérisée en ce que le guide vertical (19) destiné aux extrémités avant des treillis est monté de façon à pouvoir être réglé et fixé dans le sens de l'avance des treillis le long d'une barre de support (5).

5. Installation d'empilage selon l'une des revendications 1 à 4, caractérisée en ce que le guide vertical (19) destiné aux extrémités avant des treillis est constitué par un bras d'un levier à deux bras à l'autre bras duquel est fixée la tige du piston d'un vérin de travail (21) au moyen duquel le guide (19) peut être pivoté de sa position de travail verticale vers une position de repos sensiblement horizontale.

Fig. 1

Fig. 2

Fig. 3

0 042 833